# EUROPEAN PATENT SPECIFICATION

(11) **EP 3 090 218 B1**
(45) Date of publication and mention of the grant of the patent: **20.09.2023**
(21) Application number: 14815534.4
(22) Date of filing: 28.11.2014
(51) Int. Cl.: F25B 17/08, B01J 20/20

(54) **CARBON MONOLITHS FOR ADSORPTION REFRIGERATION AND HEATING APPLICATIONS**
KOHLENSTOFFMONOLITHEN FÜR ADSORPTIONSKÜHL- UND HEIZANWENDUNGEN
MONOLITHES DE CARBONE POUR APPLICATIONS DE RÉFRIGÉRATION ET DE CHAUFFAGE À ADSORPTION

(30) Priority: 28.11.2013 US 201361910072 P
(43) Date of publication of application: 09.11.2016
(73) Proprietor: Cooll Sustainable Energy Solutions B.V., 7554 PA Hengelo (NL)
(72) Inventor: STURM, Edward, A., New Milford, CT 06776 (US); CARRUTHERS, J., Donald, Reno NV 89523 (US); WILSON, Shaun, M., Trumbull, CT 06611 (US); WODJENSKI, Michael, J., New Milford, CT 06776 (US); DUBOIS, Lawrence, H., Danbury, CT 06811 (US)
(74) Representative: V.O.
(86) International application number: PCT/US2014/067808
(87) International publication number: WO 2015/081317

(56) References cited:
- DE-A1- 10 159 652
- DE-A1-102007 010 981
- DE-A1-102011 079 586
- US-A- 5 442 931
- US-A1- 2003 113 538

## Description

### FIELD

The present invention relates to adsorbent assemblies for use in adsorption heating and/or cooling systems.

### DESCRIPTION OF THE RELATED ART

In the use of carbon adsorbents for adsorption heating and/or cooling systems, it is desirable to utilize carbon materials that exhibit high density, high thermal conductivity, and high gas permeability, as well as high volumetric capacity for the heat exchange fluid, e.g., a refrigerant gas such as ammonia (NH₃), water (H₂O) or nitrogen (N₂).

U.S. Patent 8,539,781 issued September 24, 2013 describes adsorbent structures comprising adsorbent in contact with porous member(s) arranged to enable refrigerant gas to enter and exit the adsorbent, wherein heat conductive member(s) can be arranged in contact with the adsorbent to transfer heat between the adsorbent and a heat transfer fluid, in adsorbent-based heating and/or cooling systems. The document DE-A-10 2011079586 discloses an adsorbent assembly for use in an adsorption heating and/or cooling system, said adsorbent assembly comprising: an array of adsorbent articles in which at least one adsorbent article is arranged in contact with at least one other adsorbent article along matable engagement surfaces of respective contacting articles, with the contacting articles being configured to form a communicating gas flow passage through the contacting articles or at peripheral portions thereof.

It would be advantageous to provide new adsorbent structures that are adapted for adsorption heating and/or cooling, and that do not require the presence of a porous member in contact with the adsorbent.

Another issue in adsorption heating and/or cooling systems relates to the need to achieve efficient transfer of heat to and from the adsorbent in system operation. This requirement is adversely impacted by variability and dimensional tolerances of the adsorbent articles employed in the adsorption system, when such articles do not achieve the requisite level of contact with a heat exchange member to achieve good conductive heat transfer to and from the adsorbent. It would therefore be advantageous to provide adsorbent structures that resolve such deficiencies in heat transfer contact between adsorbent articles and metal housings or casings in which the adsorbent articles are disposed, and usefully accommodate variability in dimensions of the adsorbent articles as a result of their manufacture.

### SUMMARY

The present disclosure relates to adsorbent assemblies for use in adsorption heating and/or cooling systems.

According to the invention, there is provided an adsorbent assembly for use in an adsorption heating and/or cooling system, such adsorbent assembly comprising:
an array of adsorbent articles in which at least one adsorbent article is arranged according to arrangement (i):
   (i) in contact with at least one other adsorbent article along matable engagement surfaces of respective contacting articles, with the contacting articles being configured to form a communicating gas flow passage through the contacting articles or at peripheral portions thereof, wherein the array of adsorbent articles comprises a stack of adsorbent disk-shaped pucks;
wherein the adsorbent articles comprise carbon adsorbent and wherein the carbon adsorbent has a piece density in a range of from 600 to 1500 kg m⁻³.

Other aspects, features and embodiments of the disclosure will be more fully apparent from the ensuing description and appended claims.

### BRIEF DESCRIPTION OF THE DRAWINGS

FIG. 1 is a schematic representation of an adsorbent assembly of the present disclosure in one implementation thereof, as disposed in an adsorption heating and/or cooling assembly.
FIG. 2 is a top plan view of an illustrative adsorbent article according to one embodiment of the disclosure, defining a disk or puck conformation having a peripheral involution at an edge portion thereof.
FIG. 3 is a perspective view of a half-section of a disk-shaped adsorbent article, having an upper annular surface bounding a central bore opening.
FIG. 4 is a front elevation view of the adsorbent article half-section of FIG. 3.
FIG. 5 is a perspective view of a disk-shaped adsorbent article comprising mated half-sections of the type shown in FIGS. 3 and 4.
FIG. 6 is a side elevation view of an adsorbent article according to another embodiment, featuring beveled edges and a peripheral notch.
FIG. 7 is a side elevation view of an adsorbent article according to a further embodiment, featuring a lower beveled edge and a peripheral notch.
FIG. 8 is an elevation view of an adsorbent assembly comprising a stack of adsorbent articles, each of the type shown in FIG. 6, with peripheral notches or cut-outs being circumferentially offset in relation to one another.
FIG. 9 is an elevation view of an adsorbent assembly comprising a stack of adsorbent articles of the type shown in FIG. 7, having only a lower portion bevel, and with the notches or cut-outs of successive adsorbent articles being offset in relation to one another, so as to provide an extended adsorbable gas flow path.
FIGS. 10-18 depict additional forms of adsorbent articles that may be usefully employed in specific applications of the disclosure.
FIG. 19 is a cross-sectional view of an illustrative tube-in-a-tube heating and/or cooling assembly according to another embodiment of the disclosure.
FIG. 20 shows a hexagonally packed array of triangular cross-sectioned tubes, in the interior volume of which is disposed a suitable adsorbent material, in particular, granular, or monolithic form, which may be disposed in an enclosure defining an interior volume, as a tube-in-a-tube structure.
FIG. 21 is a top plan view of a tube-in-a-tube structure comprising an enclosure in which are disposed square cross-sectioned interior tubes each filled with an adsorbent medium.
FIG. 22 is a top plan view of a tube-in-a-tube structure comprising an enclosure in which is disposed a hexagonal interior tube array, in which each of the hexagonal interior tubes defines an interior volume that is filled with adsorbent material.
FIG. 23 is a top plan view of a tube-in-a-tube structure, including a hexagonal cross-section enclosure in which is disposed an array of triangular cross-sectioned tubes each containing adsorbent medium.
FIG. 24 shows an assortment of adsorbent articles of varied geometry and conformation.
FIG. 25 shows a circular sector-shaped adsorbent article.
FIG. 26 shows a circular sector-shaped adsorbent article, with a top peripheral beveled surface thereon.
FIG. 27 shows a circular sector-shaped adsorbent article with a peripheral edge cylindrical notch therein.
FIG. 28 shows a circular sector-shaped adsorbent article with truncated edge surfaces.
FIG. 29 shows a circular sector-shaped adsorbent article with a truncated inner surface.
FIG. 30 is a top plan view of an adsorbent assembly comprising an array of circular sector-shaped tubes, within which is disposed adsorbent, as contained in an outer cylindrical enclosure.
FIG. 31 is a top plan view of an inner tube containing adsorbent, of the type employed in the assembly of FIG. 30.
FIG. 32 shows a group of inner tubes containing adsorbent.
FIGS. 33-35 show illustrative deformable foil members having a receptacle conformation, with outwardly and upwardly divergent corrugated sidewalls joined at a lower end thereof to a base or floor structure of the receptacle.
FIGS. 36 and 37 show a deformable foil member, in which the floor of the receptacle has a central cutout opening, providing for abutting contact between adjacent adsorbent articles at such opening.
FIG. 38 is an elevation view of a stack of adsorbent articles, each of a conformation as shown in FIG. 7, and featuring offset peripheral notches, and lower portion beveling.
FIG. 39 is an elevation view, in cross section, of an adsorbent assembly comprising a vertically stacked array of adsorbent pucks, with deformable foil cups between each of the successive pucks in the stack, and contained in a cylindrical tube.
FIG. 40 is an elevation view of a stack of adsorbent articles, each featuring lower portion beveling, and reposed on a deformable foil cup having an opening in its floor element.
FIG. 41 is an elevation sectional view of an adsorbent assembly comprising a stack of cylindrical adsorbent disks, wherein each disk in the stack is positioned on a deformable foil cup, having a bottom opening to enable heat transfer fluid flow between adjacent disks, as disposed in a cylindrical tube which together with an upper cover and a lower cover defines an enclosed interior volume.

### DETAILED DESCRIPTION

Hereinafter, the present invention will be described with reference to the accompanying drawings.

The adsorption heating and/or cooling systems with which the adsorbent assemblies of the present disclosure are employed, can be of any suitable type. The adsorption heating and/or cooling system may for example be embodied as a refrigeration system that includes a refrigerated container having an evaporator associated therewith, with the adsorbent assembly of the present disclosure arranged for adsorbing and desorbing a reversibly adsorbable gas such as ammonia (NH₃), water/steam (H₂O) or nitrogen (N₂) or other suitable reversibly adsorbable fluid. The adsorption heating and/or cooling system in other applications may comprise solar collectors or other heat sources, such as supplies of waste heat, electrical heat sources, gas combustion heat sources such as natural gas or propane heating units, geothermal heat sources, or any other source or sources of heat useful in the adsorption-based heating and/or cooling system, and may additionally include sorption generators, condensers, and any other suitable apparatus and components, etc., as arranged with one or more adsorbent assemblies of the present disclosure, in an operational system to facilitate the heating and/or cooling cycle. The heating and/or cooling system may utilize a heat transfer fluid of any suitable type, and appropriate ancillary equipment, to facilitate heat exchange within the system.

As used herein, the term "adsorbable gas" refers to the reversibly adsorbable gas that is contacted with an adsorbent for adsorption thereon, and from which adsorbent the previously adsorbed gas is released during desorption, in the operation of the heating and/or cooling system in which the adsorbent assembly of the present disclosure is employed. The term "gas" in such context is intended to be broadly construed, to encompass any suitable fluids.

The term "heat transfer fluid" as used herein refers to fluid that is used to translate the heating or cooling that results from the adsorption or desorption of an adsorbable gas, to the rest of the heating and/or cooling system in which the adsorbent assembly is employed. For example, such fluid may comprise a water or glycol solution, or other fluid medium of appropriate type for the specific system in which the adsorbent assembly is employed.

As used herein, the term "tube" refers to an elongate passage member enclosing an interior volume. In various embodiments of the disclosure, as hereinafter more fully described, tubes may be provided with matable engagement surfaces, such as flat surfaces, enabling a plurality of such tubes to be close-packed or nested with one another in an array in which respective tubes are directionally aligned with one another. Accordingly, apart from any matable engagement surfaces, e.g., flat surface portions of the tube representing planar portions of the cross-sectional shape, the tubes may have any suitable shape, size and conformation enabling adsorbent when disposed therein to adsorb and desorb reversibly adsorbable gas in an adsorption heating and/or cooling system. For example, the tube may have a cross-section that is triangular, sector-shaped, square, rectangular, pentagonal, hexagonal, octagonal or otherwise polygonal, or it may include an arcuate circumference with a chordal flat surface, such as an otherwise circular cross-section with a chordal flat surface, to facilitate close-packing and/or conductive heat transfer relationship between adjacent tubes in an aligned array. Further, such shapes may be geometrically regular or irregular, and if geometrically regular may include truncated portions of such shapes, wherein the truncation edge is a flat surface or of other surface conformation. A variety of tube cross-sectional shapes is illustratively described hereinafter, in connection with various tube-in tube embodiments of the adsorbent assemblies.

As used herein, the term "piece density" refers to the density of an adsorbent article ("piece"), as determined by measuring cross-sectional area of the article, multiplying such cross-sectional area by height of the article (cross-sectional area x height of the article) to yield a piece volume, and dividing the mass of the adsorbent article by the piece volume to yield the piece density for the adsorbent article.

The disclosure in one aspect relates to an adsorbent assembly for use in an adsorption heating and/or cooling system, such adsorbent assembly comprising:
an array of adsorbent articles in which at least one adsorbent article is arranged according to arrangement (i):
   (i) in contact with at least one other adsorbent article along matable engagement surfaces of respective contacting articles, with the contacting articles being configured to form a communicating gas flow passage through the contacting articles or at peripheral portions thereof, wherein the array of adsorbent articles comprises a stack of adsorbent disk-shaped pucks;
wherein the adsorbent articles comprise carbon adsorbent and wherein the carbon adsorbent has a piece density in a range of from 600 to 1500 kg m⁻³.

The adsorbent articles comprise carbon adsorbent. The adsorbent articles may further comprise any suitable adsorbent, e.g., activated carbon adsorbent, or other adsorbent medium, such as silica, alumina, aluminosilicate or other zeolite adsorbents, adsorbent clays, macroreticulate polymer adsorbents, metalorganic frameworks (MOFs), etc. The carbon adsorbent in specific embodiments may comprise a carbon pyrolyzate of a resin selected from the group consisting of polyvinylidene chloride (PVDC), polyvinylidene fluoride (PVDF), PVDC-polymethylacrylate (PVDC-PMA), PVDF-polymethylacrylate (PVDF-PMA), polyvinylidene chloride-polyvinyl chloride (PVDC-PVC) copolymers, polyvinylidene fluoride-polyvinyl chloride (PVDF-PVC) copolymers, polyfurfuryl alcohol (PFA), polystyrene, phenolics, sugars, lignin, cellulosics, and other carbon precursors that are susceptible to being formed to a desired shape or conformation and processed by pyrolysis to provide suitable adsorbent.

The carbon adsorbent has a piece density in a range of from 600 to 1500 kg m⁻³. In various embodiments, the carbon adsorbent may have one or more of the following properties:
(i) thermal conductivity in a range of from 0.6 to 6.0 Wm⁻¹K⁻¹;
(ii) limiting concentration of ammonia in a range of from 0.18 to 0.6 kg.kg⁻¹ carbon at 313°K;
(iii) radial permeability in a range of from 5 x 10⁻¹⁶ to 1.2 × 10⁻¹³m²;
(iv) specific heat in a range of from 900 to 1200 J kg⁻¹K⁻¹; and
(v) average pore diameter in a range of from 0.5 to 50 nm.

In other embodiments, the carbon adsorbent may have the following properties: (a) a fill density measured for ammonia at 25°C and pressure of 650 ton- that is greater than 180 grams per liter of adsorbent and (b) a bulk density of from about 0.60 to about 2.0 grams per cubic centimeter.

In various embodiments, the adsorbent assembly may comprise adsorbent having sorptive affinity for ammonia as the adsorbable gas employed in the adsorption heating and/or cooling system in which the adsorbent assembly is used. Adsorbent suitable for reversible adsorption of other adsorption heating and/or cooling fluids may be utilized, and a wide variety of such fluids may be employed, in the general practice of the present disclosure.

In some embodiments, each of the adsorbent articles may have one or more openings therethrough and wherein corresponding openings of the pucks in the stack are aligned with one another to form a communicating gas flow passage. The openings may be located anywhere on the adsorbent articles, and may for example be central openings, peripheral region openings, or openings in an intermediate area between the central region and edge of the adsorbent articles.

In various embodiments, outer edge surface of the pucks in the stack may be in contact with a heat transfer member, e.g., an inner surface of a housing in which the adsorbent assembly is used.

In other embodiments, each of the adsorbent articles may have a peripheral notch. In such arrangement, the peripheral notches of adsorbent disk-shaped pucks in the stack may be aligned with one another to form a communicating gas flow passage. Alternatively, the peripheral notches of successive adsorbent disk-shaped pucks in the stack may be circumferentially offset in relation to each other. In still other embodiments, some successive adsorbent disk-shaped pucks in the stack are circumferentially offset in relation to each other, and others of the successive adsorbent disk-shaped pucks in the stack are aligned with one another.

In various embodiments, at least some of the adsorbent articles may comprise half-sections abuttingly mated with one another along diametral surfaces thereof.

The adsorbent assemblies of the disclosure in still other embodiments may be configured with at least one adsorbent article comprising a beveled edge surface.

In other implementations, at least one adsorbent article in the adsorbent assembly comprises a peripheral notch.

In still other implementations, at least one adsorbent article that has a conformation selected from the group consisting of triangular conformations, circular sector conformations, disk conformations, square conformations, rectangular conformations, hexagonal conformations, octagonal conformations, and dodecagonal conformations. Such adsorbent article(s) may have an opening therethrough, and/or may comprise a peripheral notch, and/or may comprise a truncated corner, and/or may comprise a beveled edge surface.

The adsorbent assemblies of the present disclosure may be utilized in adsorption heating and/or cooling systems of widely varying type, and such heating and/or cooling systems may include a corresponding variety of components, e.g., solar collectors, gas-fired heaters, hot-water boilers, waste heat sources and other sources of heat transfer fluid.

In various embodiments, the adsorbent assembly may comprise a tube comprising at least one matable engagement surface, and may be configured with at least one adsorbent article being in said tube comprising at least one matable engagement surface, e.g., a flat surface, which is in contact with a complementary matable engagement surface, e.g., a flat surface of another tube containing at least one adsorbent article. The respective matable engagement surfaces of the respective tubes are appropriately configured to contact one another. Such matable engagement surfaces may be of any suitable type, and may be planar or flat surfaces, arcuate services, serpentine or cog-shaped surfaces, or of any other suitable conformation that enables contacting engagement of surface areas of the respective tubes with one another.

In various embodiments, each tube may have a circular sector cross-sectional shape, comprising an arcuate outer wall and radially inwardly convergent sidewalls. Each of the tubes may be of elongate form, and may have a same length, or different lengths. Each tube may be arranged to be in contact at each of its sidewalls with a sidewall of an adjacent tube, e.g., in which the tubes have a square cross-section and each planar side abuts a planar side of an adjacent tube of like character, to form a composite array of such tubes, or in which the tubes have an equilateral triangular cross-section, with each side surface of the tube abutting a side surface of an adjacent tube, to form a composite array of tubes. The tubes may be arranged so that they form a cylindrical assembly comprising the tubes, such as in an array comprising pie-shaped sectors circumferentially arranged with each sector's arcuate outer wall being circumferentially aligned with the other sector outer walls in the cylindrical assembly, so that the arcuate outer walls of all sector-cross-sectioned tubes in the cylindrical assembly form an outer wall surface of the assembly, and with all inner apices of the sector-cross-sectioned tubes being at the central axis of the assembly.

In various embodiments, the outermost wall surfaces of matably engaged tubes in an adsorbent assembly may be in contact with a heat transfer member, such as the interior surface of a housing in which the adsorbent assembly is disposed, or alternatively, the outermost wall surfaces of matably engaged tubes in the adsorbent assembly may be in spaced relation to a heat transfer member, e.g., the interior surface of a housing in which the adsorbent assembly is disposed, to form a fluid passage therebetween adapted for flow of a heat transfer fluid therethrough.

In another embodiment, the adsorbent assembly comprises a deformable foil member, and at least one adsorbent article of the adsorbent assembly is in contact with said deformable foil member that is in contact with at least one other adsorbent article and/or a heat transfer member, e.g., an interior surface of a housing in which the adsorbent assembly is disposed. For example, the deformable foil member may be in contact with at least one other adsorbent article, or in contact with a heat transfer member such as the interior surface of the housing, or in contact with at least one other adsorbent article and in contact with a heat transfer member such as the interior surface of the housing.

The deformable foil member may have a receptacle conformation, e.g., in which the deformable foil member in the receptacle conformation comprises a sidewall flaring outwardly and upwardly from a periphery of a floor portion of the deformable foil member. The sidewall may be corrugated, crimped, accordion-folded, or otherwise be expanded or expandable in character, so as to be compactible or compressible to fill a space between adjacent adsorbent articles and/or a space between an adsorbent article and a heat transfer member associated there with, such as the interior wall of a housing that contains the adsorbent articles in its interior volume.

In various embodiments, the floor of the deformable foil receptacle may have a central opening in the floor thereof

The adsorbent assembly may therefore be arranged, so that the deformable foil receptacle is disposed with its sidewall, at an upper portion thereof, being in contact with a heat transfer member, e.g., the interior surface of a housing in which the adsorbent assembly is disposed, to accommodate conductive heat transfer between the heat transfer member and the adsorbent. In other arrangements, the array of adsorbent articles may comprise a stack of adsorbent articles, in which at least some of the articles in the stack are reposed on a deformable foil member of the above-described type.

The deformable foil member may be formed of any suitable material of construction. For example, the foil may comprise a material selected from group consisting of metals, metal alloys, thermally conductive polymers, graphite fibers, graphene, flexible graphite, and carbon nanotube felt. In some embodiments, the deformable foil member comprises a metal or metal alloy foil. The deformable foil member may comprise foil having any suitable thickness, e.g., a thickness in a range of from 0.005 mm to 0.5 mm, or in other ranges including greater or lesser thicknesses. The deformable foil member may be constructed with foil that is corrugated, crimped, or accordion folded, or otherwise constituted so as to be compactible or compressible to establish thermally conductive contact between the adsorbent article and at least one other adsorbent article and/or a heat transfer member, e.g., the interior surface of the housing.

The adsorbent assembly of the present disclosure may be employed with an adsorbable/desorbable fluid of any suitable type, such as ammonia, water, nitrogen, or other reversibly adsorbable gas.

In use, the adsorbent assembly may be arranged in an adsorption heating and/or cooling system of appropriate type, e.g., a system comprising a solar collector, gas combustion heater, electrical resistance heater, waste heat source, or other heat supply apparatus that is adapted for heating a heat transfer fluid, with the heat transfer fluid being arranged to exchange heat with the adsorbent, e.g., by heat exchange with a housing and/or tubes containing the adsorbent. The heat transfer fluid may be of any suitable type that is usefully employed in the specific system, and may for example comprise an aqueous medium or solution, a glycol composition, hydrocarbon fluid, brines, silicone oils, or the like.

The adsorbent assembly of the present disclosure utilize adsorbent articles comprising carbon adsorbent. The adsorbent assembly of the present disclosure may utilize adsorbent articles further comprising any suitable adsorbent having sorptive affinity for an adsorbable gas in the use of the assembly. The adsorbent articles may for example comprise molecular sieves, macroreticulate resins, silica, alumina, etc.

In various specific embodiments, ammonia may be employed as a reversibly adsorbable gas in operation of corresponding adsorbent assemblies, e.g., assemblies comprising carbon adsorbent.

In some embodiments, the adsorbent assemblies comprise a metal tube and comprise adsorbent that is contained in a tight fitting metal tube in order to facilitate rapid transfer of heat radially into and out of the adsorbent while a reversibly adsorbable gas cyclically flows axially in and out of the tube, and wherein the adsorbent is configured to enable rapid gas transfer into and out of the tube. As used in such context, the term "tight fitting" means that the adsorbent members are in direct contact with interior surface of the metal tube or in direct contact with a deformable metal foil member that is in turn in contact with the inside of the tube.

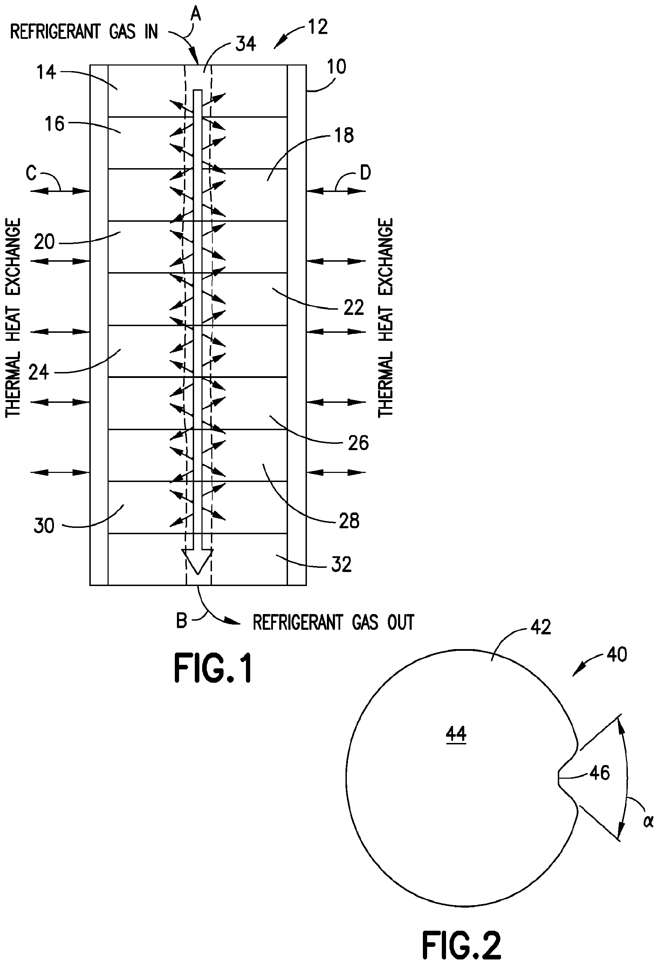

The adsorbent for such purpose may be configured with one or more gas flow openings or channels in the articles to facilitate adsorbable gas movement through the stack of adsorbent articles in the metal tube, as shown in FIG. 1. Such gas flow openings or channels in the adsorbent articles may be positioned at any suitable location or locations in such articles.

FIG. 1 is a schematic representation of an adsorbent assembly comprising a stack of adsorbent articles 14, 16, 18, 20, 22, 24, 26, 28, 30, and 32, each of which is of cylindrical disk form with a through bore opening 34, as disposed in a cylindrical metal housing 10 open at its respective ends, and containing the stack of adsorbent articles, for use in an adsorption heating and cooling system. The through bore openings of the respective adsorbent articles are axially aligned with one another to form a tubular passage bounded by the adsorbent articles, so that adsorbable gas can flow through the axially extended stack of adsorbent articles, and permeate into the adsorbent for adsorption therein, and subsequently desorb from the porosity in the porous adsorbent. In the FIG. 1 assembly, the adsorbable gas is introduced to the through bore opening 34 at an upper end of the adsorbent stack 12, as shown by arrow A ("Refrigerant Gas In"), for subsequent downward flow through the bore passage in the stack and egress from the stack at a lower end thereof, being discharged as shown by arrow B ("Refrigerant Gas Out").

The housing 10 is preferably a metal housing, but may be formed of other materials of construction having suitable thermal conductivity and heat capacity characteristics, such as glasses, ceramics, composite materials, and the like. When the housing is formed of metal, materials of construction such as aluminum, steel, brass, or the like, may be employed. The housing wall is in contact with a heat transfer fluid (such as water, propylene glycol, ethylene glycol, or other suitable heat transfer fluid), for heat transfer between the housing wall and the heat transfer fluid, as indicated in FIG. 1 by arrows C and D ("Thermal Heat Exchange").

The specific characteristics of the adsorbent articles 14, 16, 18, 20, 22, 24, 26, 28, 30, and 32 employed in the adsorbent assembly will be determined at least in part by the specific adsorbable gas that is contacted with the adsorbent in the use of the adsorbent assembly in a heating and/or cooling system. In various embodiments, the reversibly adsorbable gas that is employed with the adsorbent assembly, as deployed in a heating and/or cooling system, comprises ammonia. Other reversibly adsorbable gases may alternatively be employed.

It will be recognized that the adsorbent may be appropriately selected in the broad practice of the present disclosure, for use with a specific adsorbable gas and a specific heat transfer fluid that are employed in a given application.

The adsorbent is appropriately selected to provide porosity of a pore size range and pore size distribution that will accommodate ready ingress and egress in the respective adsorption and desorption steps of the adsorption refrigeration process, or other adsorption/desorption heating and/or cooling mode of operation. The porosity may be tailored for such purpose, so that the average pore size is adapted to the molecular size and characteristics of the adsorbable gas employed in the system.

The adsorbent material employed in the adsorbent assemblies of the present disclosure can be manufactured utilizing resin starting materials that are formed into particular desired shapes and cured to form so-called green body articles, followed by pyrolysis at elevated temperatures, with subsequent optional activation, to yield product adsorbent articles for use in the adsorbent assemblies.

The manufacture of adsorbent articles in specific embodiments may comprise compressing or otherwise compacting a green resin, e.g., polyvinylidene chloride (PVDC) or polyvinylidene fluoride (PVDF) or other starting material, into a desired conformation or form factor, followed by formation of gas flow passages in the resin structures, such as via mold forming or by drilling of one or more holes through the resin body, and pyrolysis of the resin or other pyrolyzabable starting material, to yield a carbon monolith adsorbent article of desired dimensions and conformation.

Depending on the exact requirements of the adsorption system application, mixing steps may also be employed to add materials to improve the thermal conductivity and/or permeability of the adsorbent product. The drilling of any required holes in the polymer workpiece for adsorbable gas flow may be carried out in any suitable manner, such as drilling, laser ablation, electrical discharge machining, or the like. Such techniques may be manual or automated in character.

Alternatively, or additionally, the adsorbent articles may be formed with one or more peripheral involutions or cut-outs (notches) to accommodate the flow of the reversibly adsorbable gas through a stack or other array of the adsorbent articles, in which such involutions or cut-outs serve to define gas flow passages in the adsorbent. By utilizing a formable starting material for the adsorbent, the adsorbent article can be formed in a raw starting material (e.g., polymer) piece (green body) without additional machining or fabrication steps that would otherwise be involved if an adsorbent body required post-casting mechanical operations to form gas flow passage structure therein.

An illustrative adsorbent article 40 is shown in FIG. 2, in which the main body 42 of the adsorbent article has a flat top face 44, with a corresponding bottom face not visible in the view of FIG. 2, and with a thickness of the main body between such faces, so that the article defines a disk or puck conformation. The adsorbent article of such type may be of any suitable dimensional characteristics, and in an illustrative embodiment may have a top face and bottom face diameter that is on the order of 0.512 inch (1.3 cm), with the involution 46 being bounded by inwardly convergent sidewall surfaces defining an included angle α therebetween which may be on the order of 90°, wherein the convergent sidewall surfaces are each on the order of 0.078 inch (0.2 cm) in length.

A series of such disk or tablet adsorbent articles of notched character may be stacked in a tube, in which each adsorbent article is aligned with a previous one in the stack, to form an axially continuous passage at the outer edge of the stack constituted by the successive notches that are aligned with one another, allowing rapid gas transfer throughout the entire stack of adsorbent articles. Such peripheral notch structure sacrifices minimal surface area, while maintaining extensive remaining edge surface around the circumference of the disk or tablet article that is effective to provide heat transfer area between the edge of the adsorbent article and the inner surface of the circumscribing metal housing in which the stack of notched disk or tablet adsorbent articles is disposed.

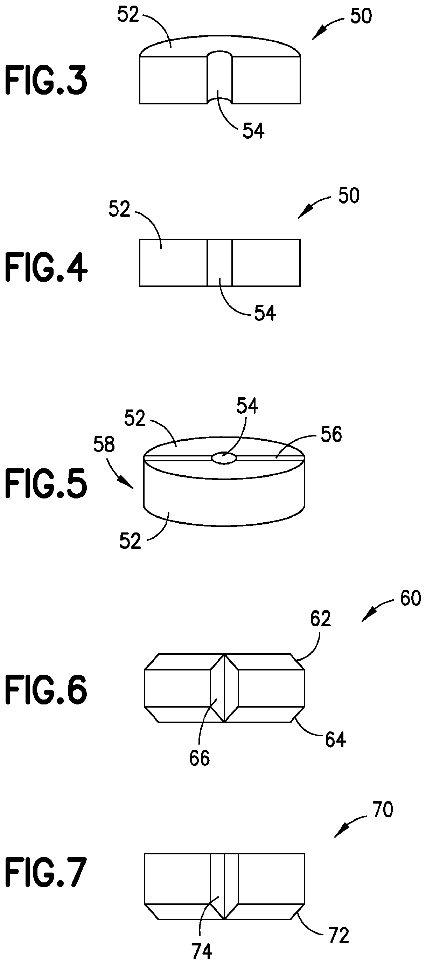

In other embodiments, the individual adsorbent articles may be formed from partial sections that are assembled to form the final article, as e.g., with the partial sections arranged in abutment to one another to form gas flow passages in the assembled adsorbent article. For example, FIG. 3 is a perspective view of a half-section 52 of a disk-shaped adsorbent article 50, having an upper annular surface bounding the through bore opening 54. A front elevation view of such adsorbent article half-section 52 is shown in FIG. 4, wherein the same reference numerals are employed. Two of the half-sections 52 of the type shown in FIGS. 3-4 then can be abutted with one another along their diametral side faces as shown in FIG. 5, which shows the assembled adsorbent article 58 comprising a diametral seam 56 formed by the abutting diametral faces and through bore opening 54.

Another embodiment of a disk- or tablet-shaped adsorbent article 60 is shown in FIG. 6, in which the adsorbent body of such article is beveled at its upper and lower portions to form beveled surfaces 62 and 64, respectively. A peripheral cut-out or notch 66 is provided at a peripheral portion of the adsorbent article, to form a gas flow passage for the reversibly adsorbable gas.

FIG. 7 is a front elevation view of another disk- or tablet-shaped adsorbent article 70, having only a lower beveled surface 72, and a peripheral notch or cut-out 74, so that the top surface extends the full width or diameter of the article (as a result of lacking peripheral beveling).

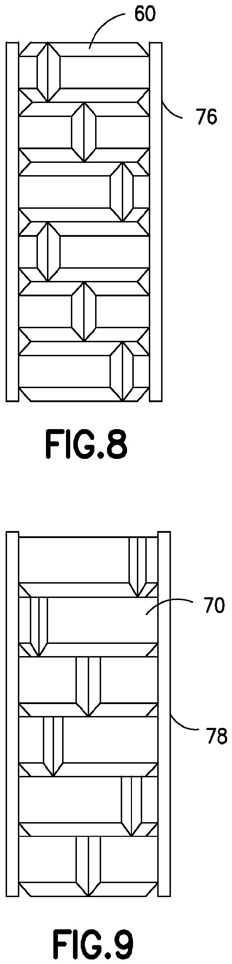

FIG. 8 is an elevation view of an adsorbent assembly comprising a stack of adsorbent articles 60, each of the type shown in FIG. 6, with peripheral notches or cut-outs being circumferentially offset in relation to one another, so that the corresponding heat transfer fluid flow passage formed by such notches constitutes an extended gas flow path. By this arrangement, adsorbable gas passes axially through the peripheral notches or cut-outs of the individual adsorbent articles in the stack, and then flows circumferentially around the passages formed by the beveled surfaces of axially abutting adsorbent articles. Gas thus is flowed axially and circumferentially to achieve an extended flow path that provides rapid ingress of adsorbable gas into the porosity of the adsorbent article during an adsorption phase of operation of a refrigeration and/or heating system, and rapid egress of the heat transfer fluid from such porosity during a desorption phase of operation of such refrigeration and/or heating system. The adsorbent article stack is disposed in a housing 76, which as previously described may be formed of a suitable metal or other appropriate material of construction having requisite conductivity and specific heat characteristics.

FIG. 9 is an elevation view of an adsorbent assembly comprising a stack of adsorbent articles 70 of the type shown in FIG. 7, having only a lower portion bevel, and with the notches or cut-outs of successive adsorbent articles being offset in relation to one another, so as to provide an extended gas flow path, similar to that described in the embodiment of FIG. 8. The axially elongate stack of adsorbent articles in the FIG. 9 embodiment is disposed with the side surfaces of the adsorbent articles in abutting contact with the inner surface of the housing 78, which may be formed of suitable material such as metal or high thermal conductivity glass, ceramic, or composite material.

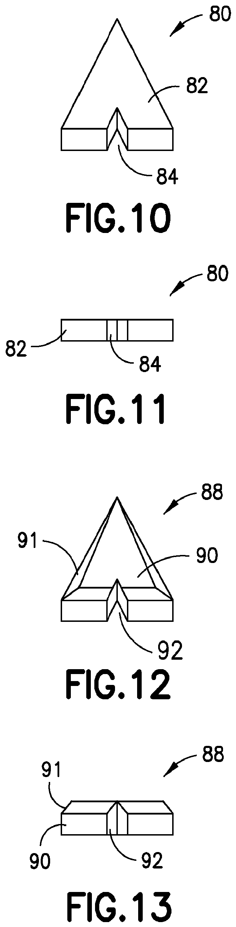

Additional forms of adsorbent articles that may be usefully employed in specific applications of the disclosure are shown in FIGS. 10-18.

FIG. 10 is a perspective view of an adsorbent article 80 having a triangular shaped body 82 with a V-shaped notch 84 at its lower edge surface in the view shown. FIG. 11 is a side elevation view of the same adsorbent article, wherein the respective structural features are correspondingly numbered with respect to those of FIG. 10.

FIG. 12 is a perspective view of an adsorbent article 88 having a triangular shaped body 90 with a top beveled edge surface 91, and a V-shaped notch 92 at the lower edge surface in the view shown. FIG. 13 is a side elevation view of the same adsorbent article, correspondingly numbered with respect to the view shown in FIG. 12.

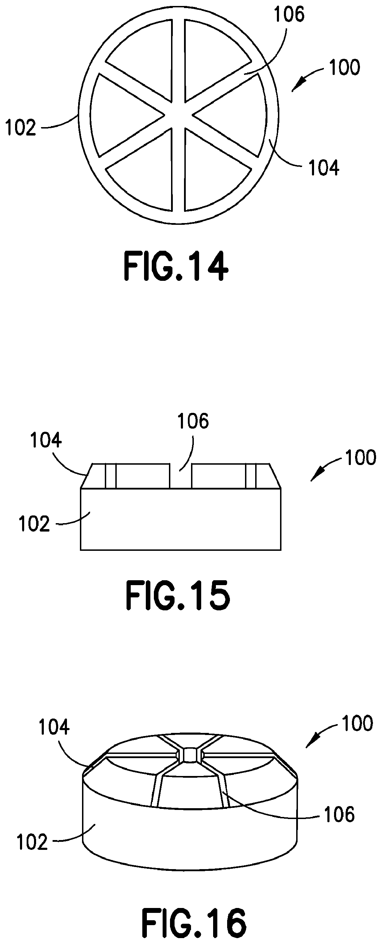

FIG 14 is a top plan view of a disk-shaped adsorbent article 100 including a body 102 having a top beveled peripheral edge 104, and diametral channels 106 at 60° intervals around the upper portion of the adsorbent article. FIG. 15 is a side elevation view of the same article, correspondingly numbered in relation to FIG. 14. FIG. 16 is a perspective view of the adsorbent article of FIGS. 14 and 15, in which the arrangement of the diametral channels is clearly shown, forming a series of sectors separated by the diametral channels.

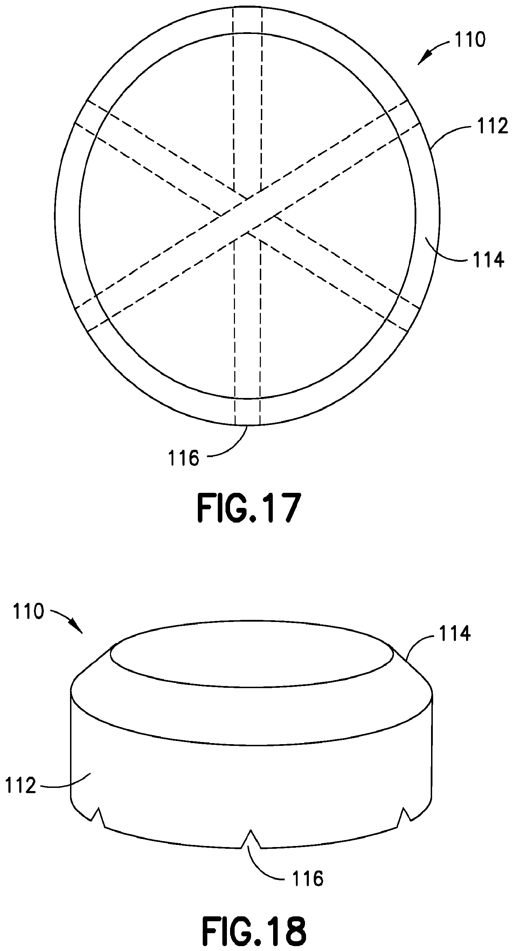

FIG. 17 is a top plan view, and FIG. 18 is a perspective view, of an adsorbent article according to another embodiment of the disclosure. The adsorbent article 110 includes a body 112 having a series of diametrally extending channels 116 on a lower portion of the article, and with the upper portion of the body being beveled to form a peripheral circumscribing bevel surface 114, as illustrated.

It will be appreciated from the foregoing description that the specific conformation of the adsorbent articles may be widely varied in the practice of the present disclosure, and that such adsorbent articles may have a shape and thickness adapted to achieve substantial contact with a casing or housing in which the adsorbent articles are disposed, for the purpose of achieving optimal thermal exchange with the casing or housing as a heat transfer member. Similarly, bevels, grooves, bores, and notches can be configured in various manners, angles, and numbers to accommodate improved flow of gas though the adsorbent bed, as can the number and size of the adsorbent pieces employed to form such adsorbent beds.

In various embodiments, the stacked or otherwise assembled adsorbent articles can be arranged with conductive metal elements between adjacent adsorbent articles, to thereby enhance heat transfer between the adsorbent articles and/or between the adsorbent articles and a casing or housing of an adsorption heating and/or cooling assembly. For example, metal plates or other heat transfer members can be provided between successive adsorbent articles in an elongate, e.g., vertically upstanding, stack of such articles. Such metal plates may have a diameter that is substantially equal to the inner diameter of the casing or housing, so that the plates are press-fitted to provide good thermal contact for conductive heat transfer between the enclosing wall and the adsorbent articles disposed in the interior volume of the enclosure.

The preceding description has been directed to adsorbent assemblies for use in adsorption heating and/or cooling systems in which adsorbent articles are disposed in a tube, in thermal contact with the tube. According to another aspect of the disclosure, a multiplicity of tubes may be provided in an enclosure, each containing adsorbent, e.g., in a stack of adsorbent articles as previously described, but wherein the heating and/or cooling assembly comprises a tube-in-a-tube arrangement. In such tube-in-a-tube arrangements, each constituent tube in the interior volume of the enclosure provides extended heat transfer area for distributing heat flow within the enclosure containing the multiple adsorbent-containing tubes. The adsorbent-containing tubes may be of any suitable cross-sectional geometry, e.g., triangular, square, rectangular, hexagonal, circular, or other geometrically regular or irregular shapes that preferably are adapted to abuttingly mate with or inter-fit with one another.

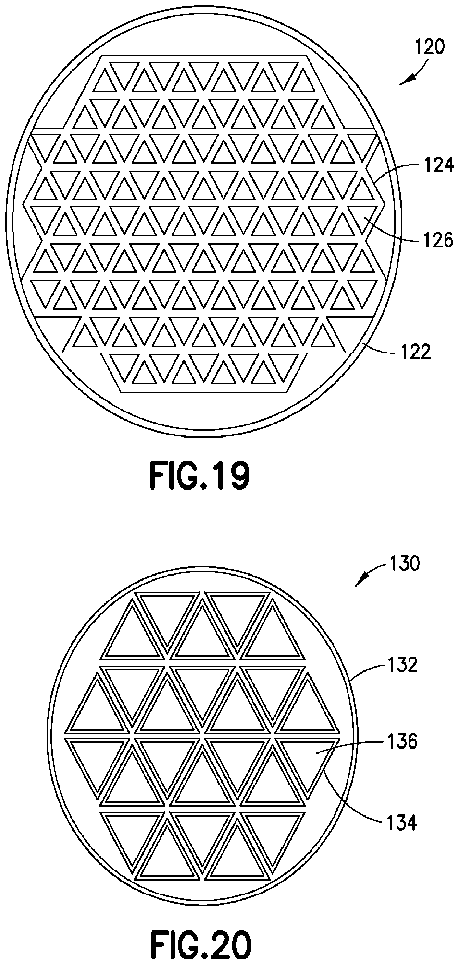

The adsorbent assemblies of the present disclosure may be utilized in a tube-in-a-tube heating and/or cooling system of a type as shown in FIG. 19. The illustrated system 120 comprises an enclosure 122 defining an interior volume, in which is disposed a plurality of triangular cross-section tubes 124, each containing adsorbent medium 126. The adsorbent medium may be of particulate character, or it may be of monolithic form, such as in the form of triangular blocks that are stacked within the triangular cross-sectioned tubes 124, to provide substantially a full fill in each interior tube of adsorbent material. The adsorbent material, if of brick, block, or other monolithic or unitary form, may additionally be shaped or provided with channels to facilitate the flow of reversibly adsorbable gas through the adsorbent within the inner tubes 124 in the assembly. The void space between the outer enclosure 122 and the adsorbent filled tubes 124 may be filled with heat transfer fluid to effect heat exchange when the reversibly adsorbable gas is cyclically adsorbed and desorbed.

FIG. 20 shows another tube-in-a-tube heating and/or cooling system 130 in which adsorbent assemblies of the present disclosure may be utilized. The system 130 as illustrated in FIG. 20 includes enclosure 132 defining an interior volume, in which is disposed a hexagonal packed array of triangular cross-sectioned tubes 134, in the interior volume 136 of which is disposed a suitable adsorbent material, in particular, granular, or monolithic form. The void space between the outer enclosure 132 and the adsorbent filled tubes 134 may be filled with heat transfer fluid to take effect heat exchange when adsorbable gas is cyclically adsorbed and desorbed.

Although the preceding discussion has been directed to elongate stacks of successively abutting adsorbent articles, it will be appreciated that the adsorbent in the interior tubes in the tube-in-a-tube heating and/or cooling system may be formed in situ to yield a continuous adsorbent medium in the tube. This may for example be achieved by filling the interior volume of the constituent interior tubes with a precursor resin for the carbon pyrolyzate material that is employed as the adsorbent medium, with the resin thereafter being cured and subsequently pyrolyzed in the interior tube to yield the continuous adsorbent medium therein.

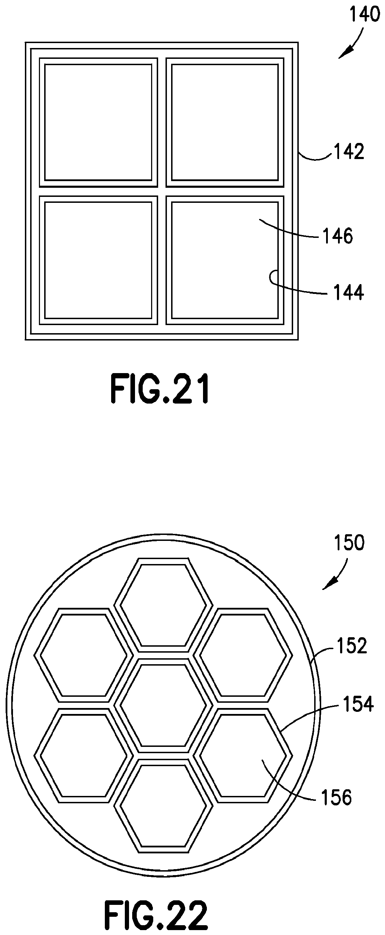

FIG. 21 is a top plan view of a tube-in-a-tube adsorbent assembly as deployed in a heating and/or cooling system 140. The system as illustrated comprises an enclosure 142 in which is disposed square cross-sectioned interior tubes 144 each filled with adsorbent medium 146. This system is designed for similar operation to that discussed for the embodiments shown in FIG. 19 and FIG. 20.

FIG. 22 is a top plan view of a similarly functioning tube-in-a-tube adsorbent assembly for use in the illustrated heating and/or cooling assembly 150, comprising an enclosure 152 in which is disposed a hexagonal interior tube array, in which each of the hexagonal interior tubes 154 defines an interior volume 156 that is filled with suitable adsorbent material 156.

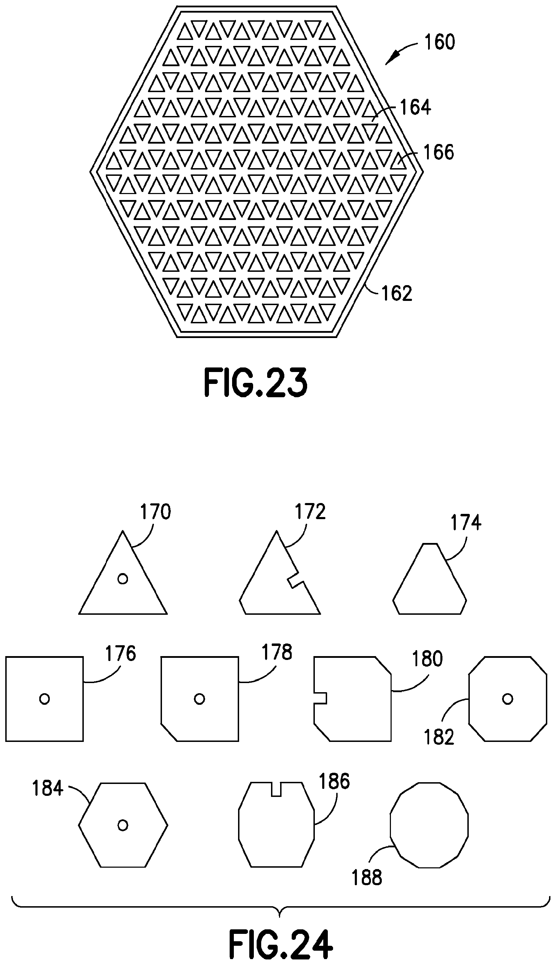

FIG. 23 is a top plan view of another embodiment of a similarly functioning tube-in-a-tube adsorbent assembly for use in the illustrated heating and/or cooling assembly 160, including a hexagonal cross-section enclosure 162 in which is disposed an array of triangular cross-sectioned tubes 164 each containing adsorbent medium 166.

FIG. 24 shows an assortment of adsorbent articles of varied geometry and conformation. The adsorbent articles include triangular-shaped adsorbent article 170 having a central heat transfer fluid flow opening therein, and a triangular-shaped adsorbent article 172 having a truncated apex surface parallel to an opposing side of the adsorbent article, with such opposing side having a rectangular notch therein. A generally triangular-shaped adsorbent article 174 is shown, having truncated apex edge surfaces, each of which is generally parallel to the opposing side surface of the article. The articles include square-shaped articles 176 (with a through bore opening therein), 178 (with a through bore opening therein and a truncated corner surface), 180 (diametrally opposite corners having truncated side surfaces, and a rectangular notch in one of the sides of the article), and 182 (a through bore opening, and each of the corners of the article being truncated). A hexagonal-shaped adsorbent article 184 is shown, having a through bore opening. An octagonal-shaped adsorbent article 186 is shown, having a rectangular notch at one of its sides. A dodecagonal-shaped adsorbent article 188 is shown, which may be press-fitted into a circular containment tube to provide multiple gas flow passageways. The various conformations shown in FIG. 24 illustrate only a partial subset of the potential variety of sizes, shapes, and conformations of adsorbent articles that can be employed in the broad practice of the present disclosure.

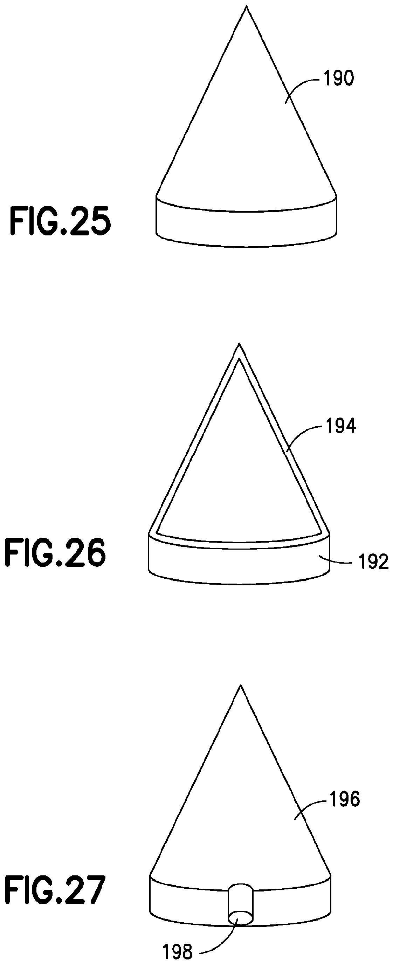

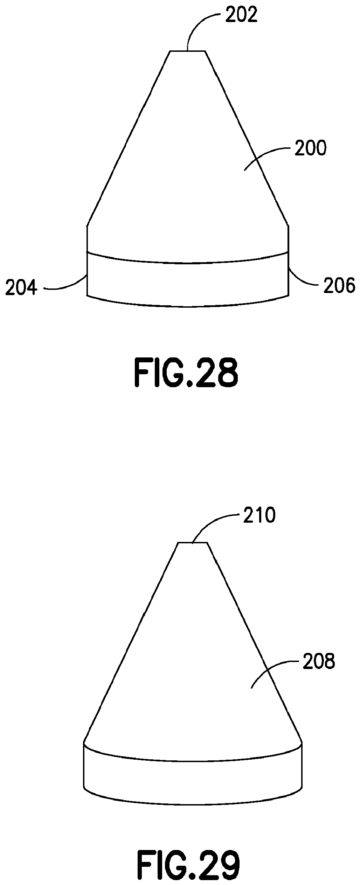

In various embodiments, the adsorbent arrangement in the adsorbent assemblies includes pie-shaped sector segments, as variously shown in FIGS. 25-29. FIG. 25 shows a pie-shaped sector adsorbent article 190. FIG. 26 shows a similar pie-shaped sector adsorbent article 192, but with a top peripheral beveled surface 194 thereon. FIG. 27 shows a pie-shaped adsorbent article 196 with a peripheral edge cylindrical notch 198 therein. FIG. 28 shows a pie-shaped sector adsorbent article 200 with truncated edge surfaces 202, 204, and 206. FIG. 29 shows a pie-shaped sector adsorbent article 208 with a truncated inner surface 210.

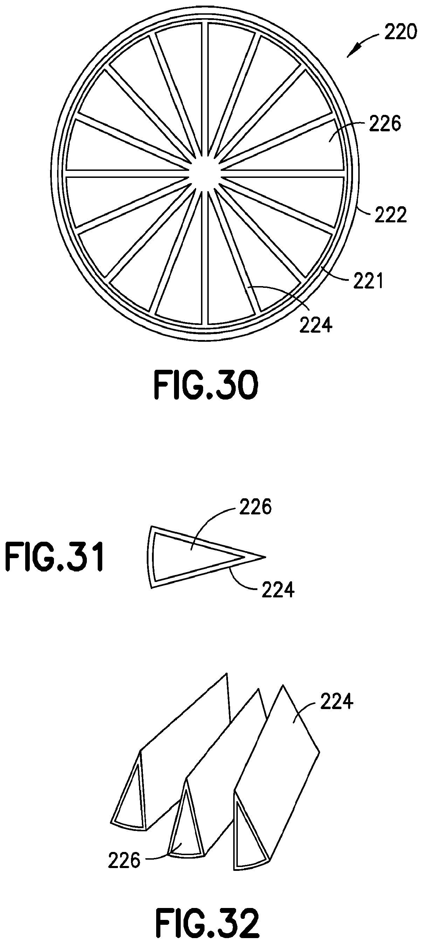

FIG. 30 is a top plan view of an adsorbent assembly in an adsorption heating and/or cooling system 220 including an outer cylindrical enclosure 222, within which is disposed an array of pie-shaped (sector-shaped) tubes 224, within which is disposed adsorbent 226. The pie-shape sector tubes 224 therefore aggregately form a cylindrical arrangement of the constituent tubes, whose outer surface is in spaced relation to the inner surface of the cylindrical enclosure 222, so as to form an annular heat transfer fluid flow passage 221 therebetween. In such manner, heat transfer fluid may be introduced into and discharged from the interior volume of the enclosure 222.

Alternatively, the outer curvate wall of the inner tubes 224 may be disposed in direct contact with interior surface of the enclosure 222, and with axial, e.g., central, passage(s) for flow of heat transfer fluid in contact with the inner tube assembly in the enclosure 222. In still other arrangements, heat transfer fluid flow passages may be provided at the inner wall surface of the enclosure, as well as elsewhere for heat transfer with the inner tubes. It will be recognized that numerous alternative flow passage arrangements may be provided, in specific configurations of a heating and/or cooling system in which the adsorbent assembly of the present disclosure is used.

FIG. 31 shows a top plan view of an inner tube 224 containing adsorbent 226, of the type employed in the assembly of FIG. 30. FIG. 32 shows a group of such inner tubes 224 containing adsorbent 226.

In the use of tube-in-tube adsorbent arrangements of the type disclosed above, the inner tubes can be circular, triangular, square, or hexagonal in cross-section, or may have any other shape and configuration. The outer tube or housing may be of any shape to maximize packing density of the inner tubes in the heating/cooling system. The inner tubes may have any convenient wall thickness, and may be manufactured by an appropriate method, such as drawing, extruding, roll-forming, welding, etc. and may be of any suitable material, e.g., aluminum, copper, steel/stainless steel/galvanized steel, etc.

In the use of adsorbent assemblies of the present disclosure, high thermal conductivity materials and thin walls of the interior tubes will enhance heat transfer and system performance, and close spacing of interior thin-walled tubes will minimize thermal mass, important for improving efficiency and for cycling of the heating/cooling system. This approach will result in a lower number of welded connections, thereby simplifying manufacturing of the adsorbent assemblies and lowering costs with improved reliability and less chance of leaks in the system. The close-packed array of inner tubes may utilize tubes of different geometric cross-sectional shape, as useful to increase the density of the inner tubes in the interior volume of the housing. The enclosure itself may be of any suitable shape and size, e.g., to allow an adsorption compressor to be placed inside the housing. Since thin-walled inner tubes will be contained within a non-compressible heat transfer fluid, and since the external housing tube can be made thicker, gas pressure within the inner tubes may be appropriately selected to avoid deformation or fracture of the adsorption (inner) tubes. This in turn minimizes the overall size of the compressor and thus may significantly lower the weight of the heating/cooling system.

In a specific embodiment, the inner tubes of a tube-in-tube adsorbent assembly may contain nanoporous carbon articles to adsorb ammonia or other adsorbable gas, in which the nanoporous carbon articles are formed so as to fill the inner tubes. The adsorbent may be formed, for example, by pressing polyvinylidene chloride (PVDC) or polyvinylidene chloride-polymethylacrylate (PVDC-PMA) copolymers into desired bodies and then firing such bodies at high temperature, with additional post-processing, if desired, e.g., as disclosed in US. Patent 6,743,278. Truncations, notches, holes and/or edge bevels may be applied during the pressing process to allow for increased gas flow and to ensure proper alignment inside the tubes. The adsorbent articles may as described comprise truncations, holes, notches, etc., to increase gas flow within the inner tube, and the respective articles may or may not be aligned, as may be appropriate to provide a desired adsorbable gas flow path through the adsorbent material. If each inner tube has at least one flat side, correspondingly formed adsorbent articles will "self-align" inside the inner tubes and remain aligned without undue movement in relation to each other, thereby minimizing abrasion and attrition loss of the adsorbent as a result of transport or movement of the heating and/or cooling system, exposure to vibration during operation, or other perturbations that may cause rubbing and consequent attrition of adsorbent articles in contact with one another.

In embodiments in which the adsorbent comprises a carbon adsorbent that is formed as a pyrolysis product of a starting material, e.g. a resin, the curing, pyrolysis and optional activation steps may result in shrinkage of the pre-formed material, or in other dimensional alteration. Such dimensional alteration may in turn affect the utility of adsorbent assemblies comprising adsorbent articles in a housing in which the adsorbent is desired to be in thermal contact with interior surface of the housing. For example, shrinkage or differential dimensional changes caused by thermal inhomogeneities in the pyrolysis or other processing operations may result in the assembled adsorbent articles failing to achieve direct complete abutting contact with a housing interior wall surface, or complete abutting contact with walls of the inner tubes, in a tube-within-a-tube arrangement of the adsorbent assembly.

Such mismatch, between the adsorbent article dimensions and the interior volume dimensions of a housing, or between the adsorbent article dimensions and the dimensions of inner tubes in a housing, could result in significant diminution of the heat transfer between the housing wall and the adsorbent articles in the adsorbent assembly, or between the inner tubes and the adsorbent articles in such inner tubes of the adsorbent assembly.

As previously described, such dimensional mismatches and variations can be addressed by the provision of deformable foil members that can be disposed against the adsorbent article and provide extended surface for contacting the inner wall or other heat transfer member in proximity to the adsorbent article. As described hereinabove, the deformable foil member may be formed as a cup or receptacle having an outwardly flared portion, for contacting the inner wall or other heat transfer member, so that heat is conductively transmitted through the foil member to the adsorbent article, and vice versa. In such manner, the deformable foil member "bridges" the gap between the adsorbent article and the heat transfer member, such as the housing inner wall surface or the interior surface of an inner tube in a tube-within-a-tube arrangement.

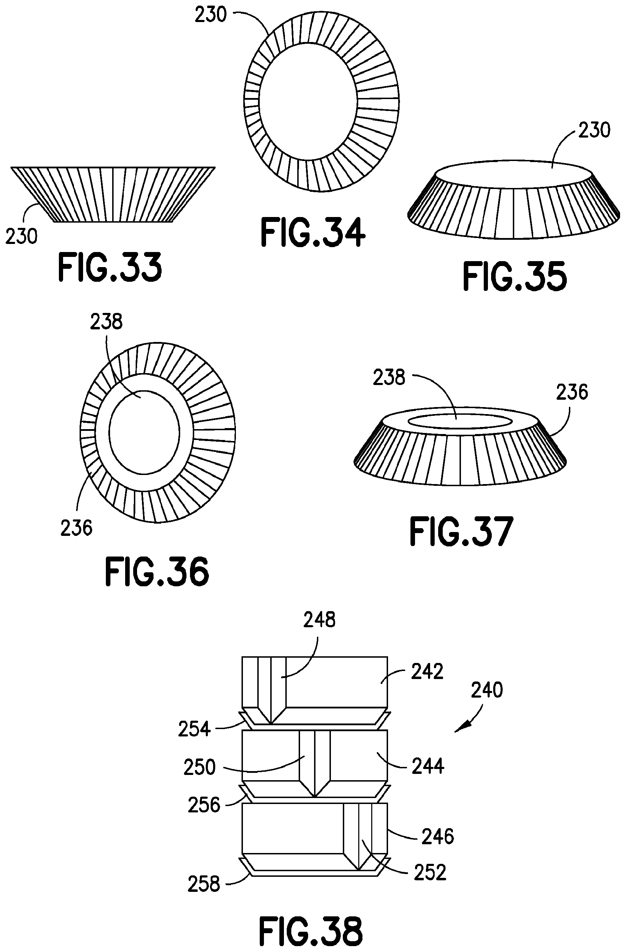

The adsorbent article may be shaped or configured so that it mates with the deformable foil member, so that the deformable foil member provides conductive heat transfer capability for the adsorbent article engaged therewith. For example, the deformable foil member 230 is shown in FIGS. 33-35 as having a receptacle conformation, with outwardly and upwardly divergent sidewalls joined at a lower end thereof to a base or floor structure for the receptacle. This cup structure contains an adsorbent article reposed on the base of the foil member, with the upper portion of the flared sidewall being adapted to conformably fit against a circumscribing interior surface of a housing containing the receptacled adsorbent article.

FIGS. 36 and 37 show a similar deformable foil member 236, in which the floor of the receptacle has a central cutout opening 238, providing for abutting contact between adjacent adsorbent articles at such opening and facilitating the flow of a reversibly adsorbable gas through an array of adsorbent articles associated with such deformable foil members.

The deformable foil member approach resolves issues of dimensional tolerances of the adsorbent articles. For example, a PVDC-based carbon material shrinks considerably, e.g., by 25% or more during pyrolysis, and shrinks again during oxidative activation, with such shrinkage increasing the variability in geometry of the adsorbent pieces in relation to the "as pressed" green state of the adsorbent precursor articles. Thus, as mentioned, variance in diameter can result in some adsorbent articles being too small to make good thermal contact with tubing walls, and others may experience an excessively tight interference fit.

By utilizing a collapsible or compactible soft metal foil cup or other deformable thermally conductive foil member between successive adsorbent articles, thermal contact with a tube or enclosure wall is assured, to enable heat to translate radially in an effective manner. The deformable foil member in the form of foil cups can be prepared at very low cost and is effective to resolve the tolerance issues between the adsorbent article diameter and the tubing or enclosure cross-sectional dimensions. Aluminum foils are acceptable for use with heat transfer fluid such as ammonia. To facilitate adsorbable gas flow through the tubes, the metal foil cups can for example have center cut-outs as shown in FIGS. 36 and 37. The foil cups can be provided in any suitable geometry or conformation to accommodate correspondingly shaped adsorbent articles.

FIG. 38 is an elevation view of a stack 240 of adsorbent articles 242, 244, and 246, each of a conformation as shown in FIG. 7, featuring offset peripheral notches 248, 250, and 252, respectively, and lower portion beveling. Each of these disk-shaped pucks is reposed on a deformable foil cup (adsorbent article 242 on foil cup 254, adsorbent article 244 on foil cup 256, and adsorbent article 246 on foil cup 258), as depicted. The deformable foil cups accommodate dimensional variations in otherwise abutting surfaces, so that good thermal contact between adjacent pucks in the stack is achieved. At same time, the outer flared sidewalls of the foil cups mate abuttingly with the beveled surfaces at the lower portion of the respective pucks, and provide an upper portion that is effective to contact a wall of a tube or enclosure in which the stack of adsorbent articles is deployed.

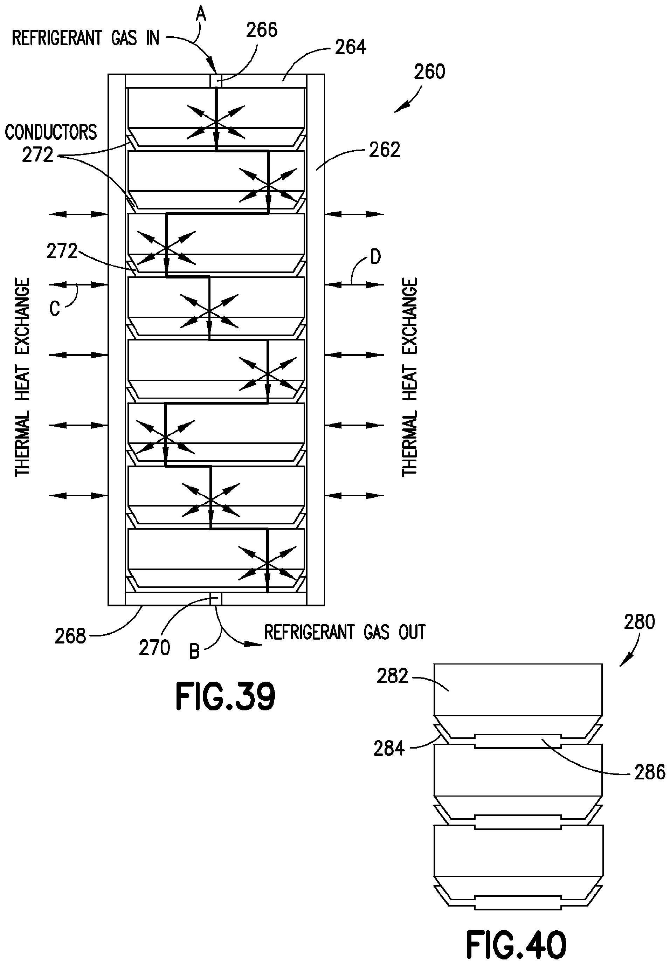

FIG. 39 is an elevation view, in cross section, of an adsorbent assembly comprising a vertically stacked array of adsorbent pucks, with deformable foil cups 272 between each of the successive pucks in the stack, as disposed in a cylindrical tube 262 of heating and/or cooling system 260. The cylindrical tube 262 is closed at its upper end by end-wall 264 having central opening 266 therein for flow of an adsorbable gas therethrough, e.g., by introduction of gas flowed into the interior volume of the tube 262 from the top end of the enclosure, as indicated by the directional arrow A. The thus-introduced gas then flows downwardly through the stack of adsorbent articles, flowing along the extended path including notches at the periphery of the respective pucks in the stacked array of adsorbent articles. The cylindrical tube is closed at its lower end by end-wall 268 having central opening 270 therein. In the configuration shown, opening 270 is a gas discharge opening through which adsorbable gas is discharged from the tube, as indicated by the directional arrow B.

In the FIG. 39 assembly, the exterior surface of the tube 262 may be in contact with a heat transfer fluid or other heat exchange medium enabling heat transfer to and from the tube during the respective adsorption and desorption operations in the heating and cooling process, as indicated by the bidirectional arrows C and D.

FIG. 40 shows an adsorbent assembly comprising a stack 280 of adsorbent articles 282, featuring lower portion beveling. Each of these disk-shaped pucks is reposed on a deformable foil cup 284 having an opening 286 in its floor element, as illustrated. The deformable foil cups therefore assure good thermal contact between adjacent pucks in the stack as well as with interior wall surface of a tube or enclosure in which the adsorbent articles stack is disposed. The opening in the floor of each cup is designed to facilitate the flow of adsorbable gas through the stack of adsorbent articles.

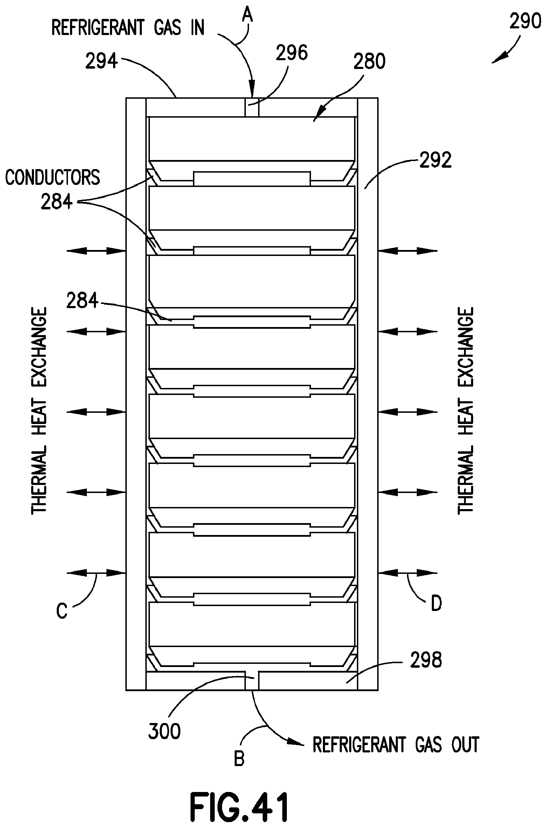

FIG. 41 is an elevation sectional view of a stack 280 of cylindrical adsorbent disks, as disposed in a cylindrical tube 292 of an adsorption heating and/or cooling system 290. This cylindrical tube, together with an upper cover 294 and a lower cover 298, defines an enclosed interior volume in which the adsorbent assembly is disposed. Each disk in the stack is positioned on a deformable foil cup 284, having a bottom opening to enable heat transfer fluid flow between adjacent disks. The adsorbable gas is introduced to the interior volume through opening 296 in the top cover in the direction indicated by arrow A. After its introduction, the adsorbable gas flows downwardly through the stacked adsorbent articles, and flows out of the interior volume through opening 300 in the bottom cover, in the direction indicated by arrow B.

The adsorbent assembly in the adsorption heating and/or cooling system 290 is arranged for heat input and heat output as schematically indicated by bidirectional arrows C and D, e.g., by provision of a heat exchange jacket or other heat transfer fluid arrangement providing heat transfer relationship to the exterior surface of the tube 292.

Although the use of deformable foil members to facilitate thermal contact of an adsorbent with a surrounding housing, tube, or casing has been described herein primarily in application to adsorption heating and/or cooling systems, it will be recognized that such usage may be employed in other applications in which a reversibly adsorbable gas is adsorbed on and subsequently desorbed from an adsorbent medium. For example, when the adsorbent is used as a gas storage and dispensing medium in a vessel containing adsorbent articles, the deformable foil members providing enhanced thermal contact between adsorbent articles and between adsorbent articles and the wall of the vessel may be usefully employed in thermally mediated adsorption and/or desorption of the gas, e.g., in a thermal swing adsorption (TSA) mode of operation, in which the adsorbent is heated to higher temperature to effect desorption of gas from the adsorbent, and cooled to lower temperature to effect loading of the adsorbent with the adsorbable gas.

Usage of the deformable foil members between adjacent adsorbent articles and in contact with a vessel wall may also be employed to thermally homogenize an adsorbent bed of such adsorbent articles so that they can be maintained in a substantially isothermal condition, without the occurrence of deleterious hotspots or cold spots in the adsorbent bed.

Accordingly, the usage of such deformable foil members in adsorbent assemblies in fluid storage and dispensing vessels containing adsorbent articles, even when heating is not used to effect desorption of gas from the adsorbent, is beneficial to isothermalize the vessel and to rapidly dissipate heat of adsorption during charging of adsorbable gas to the vessel for adsorption of such gas on the adsorbent articles therein.

## Claims

1. An adsorbent assembly for use in an adsorption heating and/or cooling system, said adsorbent assembly comprising:
an array of adsorbent articles in which at least one adsorbent article is arranged according to arrangement (i):
(i) in contact with at least one other adsorbent article along matable engagement surfaces of respective contacting articles, with the contacting articles being configured to form a communicating gas flow passage through the contacting articles or at peripheral portions thereof, wherein the array of adsorbent articles comprises a stack of adsorbent disk-shaped pucks;
wherein the adsorbent articles comprise carbon adsorbent and wherein the carbon adsorbent has a piece density in a range of from 600 to 1500 kg m⁻³.

2. The adsorbent assembly of claim 1, wherein the carbon adsorbent comprises a carbon pyrolyzate of a material selected from the group consisting of polyvinylidene chloride (PVDC), polyvinylidene fluoride (PVDF), PVDC-polymethylacrylate (PVDC-PMA), PVDF-polymethylacrylate (PVDF-PMA), polyvinylidene chloride-polyvinyl chloride (PVDC-PVC) copolymers, polyvinylidene fluoride-polyvinyl chloride (PVDF-PVC) copolymers, polyfurfuryl alcohol (PFA), polystyrene, phenolics, sugars, lignin, and cellulosics.

3. The adsorbent assembly of claim 1, wherein the carbon adsorbent has at least one of the following properties:;
(i) thermal conductivity in a range of from 0.6 to 6.0 Wm⁻¹K⁻¹;
(ii) limiting concentration of ammonia in a range of from 0.18 to 0.6 kg.kg⁻¹ carbon at 313°K;
(iii) radial permeability in a range of from 5 × 10⁻¹⁶ to 1.2 × 10⁻¹³m²,
(iv) specific heat in a range of from 900 to 1200 J kg⁻¹K⁻¹; and
(v) average pore diameter in a range of from 0.5 to 50 nm.

4. The adsorbent assembly of claim 1, wherein the carbon adsorbent has the following properties: (a) a fill density measured for ammonia at 25°C and pressure of 650 torr that is greater than 180 grams per liter of adsorbent and (b) a bulk density of from about 0.60 to about 2.0 grams per cubic centimeter.

5. The adsorbent assembly of claim 1, wherein the adsorbable gas comprises ammonia.

6. The adsorbent assembly of claim 1, wherein each of the adsorbent disk-shaped pucks has an opening or bore therethrough, and wherein openings or bores of the pucks in the stack are aligned with one another to form the gas flow passage.

7. The adsorbent assembly of claim 6, wherein an outer edge of the pucks in the stack is in contact with a heat transfer member.

8. The adsorbent assembly of claim 1, wherein each of the adsorbent disk-shaped pucks has a peripheral notch.

9. The adsorbent assembly of claim 8, wherein peripheral notches of at least some successive adsorbent disk-shaped pucks in the stack are circumferentially offset in relation to each other.

10. The adsorbent assembly of claim 1, further comprising a tube, wherein at least one adsorbent article is:
(ii) in said tube comprising at least one matable engagement surface that is in contact with a complementary matable engagement surface of another tube containing at least one adsorbent article.

11. The adsorbent assembly of claim 1, further comprising a deformable foil member, wherein at least one adsorbent article is:
(iii) in contact with said deformable foil member that is in contact with at least one other adsorbent article and/or a heat transfer member.

12. The adsorbent assembly of claim 11, in which the deformable foil member is in contact with at least one other adsorbent article, and in contact with a heat transfer member.

13. The adsorbent assembly of claim 11, wherein the deformable foil member comprises foil arranged so that it is compactible or compressible to establish thermally conductive contact between the adsorbent article and the at least one other adsorbent article and/or a heat transfer member.

## Patentansprüche

1. Adsorbens-Aufbau zur Verwendung in einem Adsorptionsheiz- und/oder -kühlsystem, der Adsorbens-Aufbau umfassend:
eine Anordnung von Adsorbensartikeln, in welcher mindestens ein Adsorbensartikel gemäß Arrangement (i) arrangiert ist:
(i) in Kontakt mit mindestens einem anderen Adsorbensartikel entlang vernetzbarer Eingriffsflächen von jeweiligen Kontaktartikeln, wobei die Kontaktartikel konfiguriert sind, um einen in Verbindung stehenden Gasdurchflusskanal durch die Kontaktartikel oder deren äußere Bereiche zu bilden, wobei die Anordnung von Adsorbensartikeln einen Stapel adsorbierender, scheibenförmiger Pucks umfasst;
wobei die Adsorbensartikel Kohlenstoffadsorbens umfassen und wobei das Kohlenstoffadsorbens eine Stückdichte in einem Bereich von von 600 bis 1500 kg m⁻³ hat.

2. Adsorbens-Aufbau nach Anspruch 1, wobei das Kohlenstoffadsorbens ein Kohlenstoffpyrolysat aus einem Material umfasst, ausgewählt aus der Gruppe bestehend aus Polyvinylidenchlorid (PVDC), Polyvinylidenfluorid (PVDF), PVDC-Polymethylacrylat (PVDC-PMA), PVDF-Polymethylacrylat (PVDF-PMA), Polyvinylidenchlorid-Polyvinylchlorid (PVDC-PVC) Copolymere, Polyvinylidenfluorid-Polyvinylchlorid (PVDF-PVC)-Copolymere, Polyfurfurylalkohol (PFA), Polystyren, Phenolharzen, Zuckern, Lignin, und Cellulosen.

3. Adsorbens-Aufbau nach Anspruch 1, wobei das Kohlenstoffadsorbens mindestens eine der folgenden Eigenschaften hat:
(i) Wärmeleitfähigkeit in einem Bereich von von 0,6 bis 6,0 Wm⁻¹K⁻¹;
(ii) Grenzwert von Ammoniakkonzentration in einem Bereich von von 0,18 bis 0,6 kg.kg⁻¹ Kohlenstoff bei 313°K;
(iii) radiale Durchlässigkeit in einem Bereich von von 5 × 10-¹⁶ bis 1,2 x 10⁻¹³ m²;
(iv) spezifische Wärme in einem Bereich von von 900 bis 1200 J kg⁻¹K⁻¹; und
(v) durchschnittlicher Porendurchmesser in einem Bereich von von 0,5 bis 50 nm.

4. Adsorbens-Aufbau nach Anspruch 1, wobei das Kohlenstoffadsorbens die folgenden Eigenschaften hat: (a) eine Fülldichte gemessen für Ammoniak bei 25° C und einem Druck von 650 torr, der größer ist als 180 Gramm pro Liter Adsorbens und (b) eine Schüttdichte von von ungefähr 0,60 bis ungefähr 2,0 Gramm pro Kubikzentimeter.

5. Adsorbens-Aufbau nach Anspruch 1, wobei das adsorbierbare Gas Ammoniak umfasst.

6. Adsorbens-Aufbau nach Anspruch 1, wobei jeder der adsorbierenden, scheibenförmigen Pucks eine Öffnung oder ein Loch durch sie hindurch hat, und wobei Öffnungen oder Löcher der Pucks in dem Stapel aufeinander ausgerichtet sind, um den Gasdurchflusskanal zu bilden.

7. Adsorbens-Aufbau nach Anspruch 6, wobei ein äußerer Rand der Pucks in dem Stapel in Kontakt mit einem Wärmeübertragungselement ist.

8. Adsorbens-Aufbau nach Anspruch 1, wobei jeder der adsorbierenden, scheibenförmigen Pucks eine periphere Einkerbung hat.

9. Adsorbens-Aufbau nach Anspruch 8, wobei periphere Einkerbungen von mindestens einigen aufeinanderfolgenden adsorbierenden, scheibenförmigen Pucks in dem Stapel in Umfangsrichtung versetzt zueinander angeordnet sind.

10. Adsorbens-Aufbau nach Anspruch 1, ferner umfassend ein Rohr, wobei mindestens ein Adsorbensartikel ist:
(ii) in diesem Rohr, umfassend mindestens eine vernetzbare Eingriffsoberfläche, die in Kontakt mit einer kompatiblen vernetzbaren Eingriffsoberfläche eines anderen Rohrs ist, enthaltend mindestens einen Adsorbensartikel.

11. Adsorbens-Aufbau nach Anspruch 1, ferner umfassend ein verformbares Folienelement, wobei mindestens ein Adsorbensartikel ist:
(iii) in Kontakt mit diesem verformbaren Folienelement, das in Kontakt mit mindestens einem anderen Adsorbensartikel und/oder einem Wärmeübertragungselement ist.

12. Adsorbens-Aufbau nach Anspruch 11, in welchem das verformbare Folienelement in Kontakt mit mindestens einem weiteren Adsorbensartikel, und in Kontakt mit einem Wärmeübertragungselement ist.

13. Adsorbens-Aufbau nach Anspruch 11, wobei das verformbare Folienelement eine Folie umfasst, so angeordnet, dass sie verdichtbar oder komprimierbar ist, um wärmeleitenden Kontakt zwischen dem Adsorbensartikel und dem mindestens einen anderen Adsorbensartikel und/oder einem Wärmeübertragungselement herzustellen.

## Revendications

1. Assemblage d'adsorbant pour une utilisation dans un système de chauffage et/ou refroidissement par adsorption, ledit assemblage d'adsorbant comprenant :
une rangée d'articles d'adsorbant dans laquelle au moins un article d'adsorbant est arrangé selon l'arrangement (i) :
(i) en contact avec au moins un autre article d'adsorbant le long de surfaces d'engagement pouvant être appariées d'articles de mise en contact respectifs, avec les articles de mise en contact étant configurés pour former un passage d'écoulement de gaz communiquant à travers les articles de mise en contact ou sur des portions périphériques de ceux-ci, dans lequel la rangée d'articles d'adsorbant comprend un empilement de rondelles en forme de disque d'adsorbant ;
dans lequel les articles d'adsorbant comprennent un absorbant de carbone et dans lequel l'adsorbant de carbone présente une densité de pièce dans un intervalle de 600 à 1 500 kg m⁻³.

2. Assemblage d'adsorbant selon la revendication 1, dans lequel l'adsorbant de carbone comprend un pyrolysat de carbone d'un matériau choisi dans le groupe consistant en poly(chlorure de vinylidène) (PVDC), poly(fluorure de vinylidène) (PVDF), PVDC-poly(acrylate de méthyle) (PVDC-PMA), PVDF-poly(acrylate de méthyle) (PVDF-PMA), copolymères de poly(chlorure de vinylidène)-poly(chlorure de vinyle) (PVDC-PVC), copolymères de poly(fluorure de vinylidène)-poly(chlorure de vinyle) (PVDF-PVC), poly(alcool furfurylique) (PFA), polystyrène, composés phénoliques, sucres, lignine, et composés cellulosiques.

3. Assemblage d'adsorbant selon la revendication 1, dans lequel l'adsorbant de carbone présente au moins une des propriétés suivantes :
(i) conductivité thermique dans un intervalle de 0,6 à 6,0 W m⁻¹K⁻¹ ;
(ii) concentration limitante d'ammoniac dans un intervalle de 0,18 à 0,6 kg.kg⁻¹ de carbone à 313°K ;
(iii) perméabilité radiale dans un intervalle de 5 × 10⁻¹⁶ à 1,2 × 10⁻¹³m² ;
(iv) chaleur spécifique dans un intervalle de 900 à 1 200 J kg⁻¹K⁻¹ ; et
(v) diamètre moyen de pore dans un intervalle de 0,5 à 50 nm.

4. Assemblage d'adsorbant selon la revendication 1, dans lequel l'adsorbant de carbone présente les propriétés suivantes : (a) une densité de remplissage mesurée pour l'ammoniac à 25°C et une pression de 650 torr qui est supérieure à 180 grammes par litre d'adsorbant et (b) une masse volumique apparente d'environ 0,60 à environ 2,0 grammes par centimètre cube.

5. Assemblage d'adsorbant selon la revendication 1, dans lequel le gaz adsorbable comprend de l'ammoniac.

6. Assemblage d'adsorbant selon la revendication 1, dans lequel chacune des rondelles en forme de disque d'adsorbant présente une ouverture ou perforation à travers celle-ci, et dans lequel les ouvertures ou perforations des rondelles dans l'empilement sont alignées les unes avec les autres pour former le passage d'écoulement de gaz.

7. Assemblage d'adsorbant selon la revendication 6, dans lequel un bord externe des rondelles dans l'empilement est en contact avec un élément de transfert de chaleur.

8. Assemblage d'adsorbant selon la revendication 1, dans lequel chacune des rondelles en forme de disque d'adsorbant présente une encoche périphérique.

9. Assemblage d'adsorbant selon la revendication 8, dans lequel les encoches périphériques d'au moins certaines rondelles en forme de disque d'adsorbant successives dans l'empilement sont décalées en circonférence les unes par rapport aux autres.

10. Assemblage d'adsorbant selon la revendication 1, comprenant de plus un tube, dans lequel au moins un article d'adsorbant est :
(ii) dans ledit tube comprenant au moins une surface d'engagement pouvant être appariée qui est en contact avec une surface d'engagement pouvant être appariée complémentaire d'un autre tube contenant au moins un article d'adsorbant.

11. Assemblage d'adsorbant selon la revendication 1, comprenant de plus un élément de feuille déformable, dans lequel au moins un article d'adsorbant est :
(iii) en contact avec ledit élément de feuille déformable qui est en contact avec au moins un autre article d'adsorbant et/ou un élément de transfert de chaleur.

12. Assemblage d'adsorbant selon la revendication 11, dans lequel l'élément de feuille déformable est en contact avec au moins un autre article d'adsorbant, et en contact avec un élément de transfert de chaleur.

13. Assemblage d'adsorbant selon la revendication 11, dans lequel l'élément de feuille déformable comprend une feuille disposée de sorte qu'elle puisse être compactée ou compressée pour établir un contact thermiquement conducteur entre l'article d'adsorbant et le au moins un autre article d'adsorbant et/ou un élément de transfert de chaleur.
